(19) Europäisches Patentamt
European Patent Office
Office européen des brevets

(11) **EP 3 735 578 B1**

(12) **FASCICULE DE BREVET EUROPEEN**

(45) Date de publication et mention de la délivrance du brevet:
**18.06.2025 Bulletin 2025/25**

(21) Numéro de dépôt: **18836265.1**

(22) Date de dépôt: **27.12.2018**

(51) Classification Internationale des Brevets (IPC):
**G01N 21/88** (2006.01) **G01N 21/95** (2006.01)

(52) Classification Coopérative des Brevets (CPC):
**G01N 21/9501; G01N 21/8806**

(86) Numéro de dépôt international:
**PCT/EP2018/097014**

(87) Numéro de publication internationale:
**WO 2019/134887 (11.07.2019 Gazette 2019/28)**

(54) **PROCEDE ET SYSTEME D'INSPECTION OPTIQUE D'UN SUBSTRAT**

**VERFAHREN UND SYSTEM ZUR OPTISCHEN INSPEKTION EINES SUBSTRATS**

**METHOD AND SYSTEM FOR OPTICALLY INSPECTING A SUBSTRATE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.01.2018 FR 1850077**

(43) Date de publication de la demande:
**11.11.2020 Bulletin 2020/46**

(73) Titulaire: **Unity Semiconductor**
**38330 Montbonnot-Saint-Martin (FR)**

(72) Inventeur: **DURAND DE GEVIGNEY, Mayeul**
**38240 MEYLAN (FR)**

(74) Mandataire: **IPAZ**
**Bâtiment Platon**
**Parc Les Algorithmes**
**91190 Saint-Aubin (FR)**

(56) Documents cités:
**WO-A1-2016/050735 WO-A1-2016/050738**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention concerne un procédé d'inspection d'un substrat, tel qu'une plaquette, par exemple pour la microélectronique, l'optique ou l'optoélectronique. Elle concerne également un système d'inspection d'un substrat mettant en œuvre un tel procédé.

Le domaine de l'invention est plus particulièrement, mais de manière non limitative, celui de la détection optique par effet Doppler.

### État de la technique

Les substrats, tels que des plaquettes (ou *« wafers »* selon la terminologie anglo-saxonne) pour l'électronique, l'optique ou l'optoélectronique, doivent être inspectés pendant et après leur fabrication afin de pouvoir détecter et identifier d'éventuels défauts présents sur leurs surfaces ou dans leur volume. Ces défauts, généralement de très petite taille, peuvent être des défauts de cristaux, des rayures, des aspérités, etc.

L'inspection ne vise généralement pas uniquement à déceler la présence ou non d'un défaut ou d'une particule, mais aussi à réaliser une classification de ces défauts et à fournir des informations qualitatives et/ou des données statistiques sur les défauts, telles que leur localisation, leur taille et/ou leur nature, par exemple. Ces informations peuvent être représentatives de la qualité du procédé de fabrication du substrat ou d'une étape de production dans laquelle le substrat est utilisé.

Des systèmes d'inspection ont été développés en vue de détecter des défauts de plus en plus petits et de fournir les informations précitées.

Différentes techniques d'inspection de substrats sont connues.

On connait des techniques basées sur une mesure d'intensité de signaux de diffusion en champ noir, ou champ sombre *(« dark field »* selon la terminologie anglo-saxonne), telle que décrite, par exemple, dans le document US 6,590,645 B1. Seule la lumière diffusée par un défaut ou une particule sur la plaquette est recueillie sur un détecteur ; la réflexion spéculaire n'est pas acquise par le détecteur, ce qui permet d'améliorer le contraste de détection. Une variation de l'intensité diffusée révèle la présence d'un défaut à la surface de la plaquette.

Une autre technique est la vélocimétrie laser à effet Doppler (LDV, acronyme du terme anglo-saxon *« Laser Doppler Velocimetry »*).

Cette technique est décrite, par exemple, dans le document WO 2009/112704 et est basée sur une détection de type interférométrique. Le principe de fonctionnement est de créer un volume de franges d'interférence à l'intersection de deux faisceaux lumineux issus d'une même source lumineuse, et de faire traverser ce volume de mesure par la plaquette à inspecter. Les faisceaux lumineux et les éléments de détection sont configurés de telle manière à réaliser une détection en champ sombre. Lorsqu'un défaut ou une particule traverse les franges d'interférence, leur présence se traduit sur le détecteur par un signal de mesure, par exemple un signal électrique, constituant une bouffée Doppler. Une bouffée Doppler est un signal présentant une double composante fréquentielle : une composante de fréquence basse, formant l'enveloppe du signal et correspondant à l'intensité lumineuse moyenne diffusée par le défaut, et une composante de fréquence haute correspondant à la fréquence Doppler contenant l'information sur la vitesse de déplacement du défaut et liée à la distance entre les franges d'interférence.

Une technique interférométrique similaire est décrite dans WO 2016/050735.

Les techniques connues sont basées sur des mesures d'intensité. La qualité de détection d'un défaut est alors directement liée à la dynamique et au rapport signal sur bruit du système de détection. Cependant, la nature et les tailles des défauts présents sur un substrat sont très variables. Différentes difficultés peuvent alors se présenter.

Ainsi, certains types de défauts peuvent engendrer la saturation du signal de détection et donc être non quantifiables. De plus, des signaux parasites ne correspondant pas à la présence réelle d'un défaut mais à des artefacts peuvent être saisis. A l'inverse, des petits défauts ou des parties de structures de défauts peuvent ne pas être détectés.

Pour s'affranchir des nombreuses sources de mesures parasites afin d'optimiser le rapport signal sur bruit et extraire de façon non ambiguë des signaux permettant d'obtenir des informations sur la nature et les caractéristiques des défauts, la mise en place des systèmes de mesure basés sur les techniques de champ sombre requiert d'importants moyens, comme la multiplication des sources de lumière et des détecteurs ou d'importants traitements de données.

### Exposé de l'invention

Un but de la présente invention est de proposer un procédé et un système d'inspection d'un substrat qui permettent de remédier à ces inconvénients.

Un but de la présente invention est de proposer un procédé et un système d'inspection d'un substrat permettant une plus grande fiabilité de détection de défauts.

Un autre but de la présente invention est de proposer un procédé et un système d'inspection d'un substrat permettant de détecter, discriminer et classifier des défauts présents sur le substrat sans mise en place complexe ou onéreuse de moyens de mesure et de traitement de signaux.

Un autre but de la présente invention est de proposer un procédé et un système d'inspection d'un substrat permettant de cartographier des défauts avec des dispositifs d'inspection actuels avec très peu, voire sans, modification de leur architecture matérielle.

Ces objectifs sont atteints au moins en partie avec un procédé d'inspection d'un substrat selon la revendication 1.

Selon l'invention, le volume de mesure est créé à l'intersection de deux (ou plus) faisceaux optiques issus d'une même source et qui se croisent avec un angle non-nul. Ces faisceaux génèrent ainsi des franges d'interférence dans ce volume de mesure.

Le signal de mesure représentatif de la lumière diffusée par le substrat peut être, par exemple, un signal acquis par un photodétecteur (tel qu'une photodiode avalanche). Ce signal correspond à la lumière diffusée par le substrat lors de son passage dans le volume de mesure dans un volume ou un ou des angles solides. De préférence, cette lumière diffusée exclut la réflexion spéculaire. Ainsi, en présence d'un substrat purement réfléchissant qui ne génère pas de diffusion, le signal de mesure devrait être nul.

Lorsque l'une source de diffusion, tel qu'un défaut du substrat (par exemple un trou ou une particule) traverse le volume de mesure il génère une lumière diffusée dont l'intensité est modulée au cours du temps, du fait du déplacement du wafer, par les interférences des faisceaux lumineux. Cette intensité est ainsi modulée à une fréquence de modulation qui dépend de la disposition des faisceaux lumineux et de la vitesse de déplacement du substrat.

Le signal de mesure correspondant au passage d'une source de diffusion ou d'un défaut avec la fréquence de modulation peut être appelé une bouffée Doppler. La présence de la fréquence de modulation dans le signal de mesure constitue une signature fréquentielle, qui permet de discriminer les défauts qui traversent le volume de mesure des défauts qui génèrent de la lumière diffusée hors de ce volume de mesure. En effet dans ce dernier cas les défauts ne traversent pas les franges d'interférence et ne génèrent donc pas de fréquence de modulation.

Avantageusement, le procédé selon l'invention permet ainsi d'identifier et de discriminer les défauts au moins par une signature fréquentielle, qui ne peut être émise que par des défauts traversant le volume de mesure.

Pour cela, le procédé selon l'invention met en œuvre une étape de prédiction ou de calcul d'un signal attendu représentatif du passage d'un défaut dans le volume de mesure. Ce calcul peut porter sur la fréquence de modulation attendue. Il peut également porter sur d'autres paramètres attendus tels qu'une forme de signal ou une enveloppe, qui se traduisent dans le domaine spectral par un spectre de modulation autour de la fréquence de modulation attendue.

Le procédé selon l'invention comprend en outre une étape de détermination de valeurs caractéristiques représentatives d'un contenu fréquentiel du signal de mesure dans un voisinage autour de la fréquence de modulation attendue. Ces valeurs caractéristiques sont obtenues en effectuant une comparaison du signal de mesure avec des caractéristiques de signaux attendus représentatifs de passages de défauts dans le volume de mesure, essentiellement liées à la fréquence de modulation attendue. On constitue ainsi à partir de ces valeurs caractéristiques un signal validé beaucoup plus représentatif que le signal de mesure brut de la présence de défauts dans le volume de mesure.

Ainsi, la détection d'un défaut est décorrélée de l'intensité lumineuse rétrodiffusée par ce défaut. Même des défauts de très petite taille ou très faiblement diffusants peuvent être détectés, en particulier grâce à une amélioration du rapport signal sur bruit.

De plus, le procédé selon l'invention permet de distinguer un défaut ou une particule qui génère une bouffée Doppler d'un fond continu diffusant. En effet, le fond continu est dû à une superposition d'une pluralité de diffuseurs qui génèrent un bruit d'intensité sans composante fréquentielle notable, puisque qu'il correspond à une superposition incohérente, ou de phases aléatoires, de bouffées.

Le procédé permet également de distinguer un signal issu du volume de mesure d'un signal généré à l'extérieur de ce volume, car ce dernier ne comporte pas de composante fréquentielle notable à la fréquence de modulation attendue. Ceci est notamment le cas pour des signaux venant de la surface opposée à la surface inspectée pour des substrats transparents.

Ainsi l'invention permet de générer, à des fins d'analyse, un signal validé dont les caractéristiques pour la détection de défauts (spécificité, capacité de discrimination, rapport signal sur bruit) sont fortement améliorées comparativement au signal de mesure en intensité.

Les étapes de calcul des paramètres attendus et de détermination de valeurs caractéristiques pour constituer le signal validé peuvent être réalisées pendant, avant et/ou après l'acquisition du signal de mesure représentatif de la lumière diffusée. Ces étapes peuvent ainsi être réalisées en temps réel, et/ou avec des signaux de mesure sauvegardés. Elles peuvent être réalisées par des dispositifs de traitement de données numérique et/ou analogique.

Toutes les étapes du procédé selon l'invention peuvent être réalisées pour un ou une pluralité de signaux de mesure mesurés lors d'un déplacement du substrat effectué de sorte à parcourir avec le volume de mesure toute ou partie d'une surface du substrat. Cette surface peut être notamment l'une des deux surfaces extérieures du substrat ou une section ou une interface dans le volume du substrat.

Le procédé selon l'invention comprend les étapes suivantes :

- détermination d'une valeur de seuil des valeurs caractéristiques ; et
- comparaison du signal validé à ladite valeur de seuil.

Une telle comparaison du signal validé à une valeur de seuil permet de sélectionner tous ou seulement certains types de défauts, et/ou de rejeter un bruit de fond résiduel.

Selon un mode de réalisation, l'étape de détermination d'une valeur de seuil peut être réalisée à partir d'un signal validé obtenu avec un substrat de test de caractéristiques connues.

En particulier, cette étape de détermination d'une valeur de seuil peut être réalisée à partir d'une étude statistique sur un substrat propre exempt de sources de diffusions, et/ou sur un substrat sur lequel des sphères diffusantes de caractéristiques connues ont été déposées. La valeur de seuil peut être déterminée de façon à pouvoir détecter le plus de défauts possibles lors de l'inspection d'un substrat, tout en évitant des fausses détections.

Selon un mode de réalisation avantageux, l'étape de détermination des valeurs caractéristiques peut comprendre les étapes suivantes :

- modélisation du signal attendu selon une fonction modèle, pour produire un signal modélisé ;
- comparaison du signal modélisé au signal de mesure, incluant le calcul d'une distance au sens d'une norme euclidienne entre le signal modélisé et le signal de mesure.

L'étape de modélisation peut être réalisée, par exemple, en modélisant une bouffée Doppler (le signal attendu) par une fonction sinusoïdale modulée en amplitude par une fonction Gaussienne, avec éventuellement une composante continue. Les valeurs caractéristiques peuvent être alors obtenues en effectuant par exemple un calcul de vraisemblance, comme expliqué plus loin, ou de corrélation entre la bouffée Doppler ainsi modélisée et le signal de mesure acquis. Elles sont alors représentatives d'une mesure de ressemblance entre le signal de mesure acquis et une bouffée Doppler attendue, ou d'une probabilité que le signal de mesure acquis contienne une bouffée Doppler.

Ce mode de réalisation présente l'avantage de prendre en compte, en plus du bruit local du signal de mesure et de la fréquence de modulation attendue, également la forme de l'enveloppe de la bouffée Doppler attendue.

Selon un autre mode de réalisation, l'étape de détermination des valeurs caractéristiques peut comprendre un filtrage passe-bande du signal de mesure selon une bande passante adaptée pour ne transmettre que le contenu fréquentiel du signal de mesure dans un voisinage autour de la fréquence de modulation attendue.

Dans ce cas, la valeur caractéristique peut prendre en compte, par exemple, l'amplitude de modulation du signal de mesure filtré, ou le rapport entre l'amplitude de modulation du signal de mesure filtré et une valeur continue du signal de mesure avant filtrage.

Selon un autre mode de réalisation, l'étape de détermination des valeurs caractéristiques peut comprendre les étapes suivantes :

- calcul d'une transformée de Fourier locale du signal de mesure pour obtenir une densité spectrale de puissance locale ;
- détermination d'une valeur caractéristique à partir de la densité spectrale de puissance à, ou dans un voisinage comprenant, la fréquence de modulation attendue.

Une transformée de Fourier locale est une transformée de Fourier calculée sur une portion ou un voisinage du signal de mesure, par exemple dans une fenêtre glissante.

Bien entendu, l'étape de détermination des valeurs caractéristiques peut également mettre en œuvre d'autres méthodes de traitement de signal, telles que des transformées en ondelettes, ou des transformées temps-fréquence.

Avantageusement, le procédé selon l'invention peut comprendre en outre une étape de construction d'image du substrat en utilisant le signal validé.

En effet, en exploitant une pluralité de valeurs caractéristiques déterminées pour l'ensemble du substrat, il est possible de construire une image, ou une carte, du substrat représentant l'ensemble des défauts retenus à partir du signal validé.

Selon un exemple de réalisation non limitatif, l'étape de construction d'image peut comprendre une étape d'attribution de valeurs d'intensité à des valeurs caractéristiques correspondant à (ou localisées à) des positions sur ou dans le substrat, lesquelles valeurs d'intensité correspondant à des pixels de l'image.

Ainsi, le procédé selon l'invention permet de visualiser la présence ou non d'un défaut sur le substrat, les valeurs d'intensité attribuées aux pixels étant indépendantes ou distinctes d'un signal d'amplitude de lumière rétrodiffusée par les défauts. En d'autres termes, le procédé selon l'invention permet d'obtenir une plus grande fiabilité de détection de présence de défauts, et ce même pour les défauts de très petite taille.

Suivant des modes de mise en œuvre, le procédé selon l'invention peut comprendre une étape de détermination d'un paramètre représentatif déduit du signal de mesure et/ou du signal validé.

Ce paramètre représentatif peut être déduit du signal validé, et/ou du signal de mesure pour les bouffées Doppler validées sur la base du signal validé. Ce paramètre représentatif peut être, par exemple, un rapport de vraisemblance issu du signal validé, ou la visibilité, l'amplitude de modulation de la bouffée, l'amplitude maximum de la bouffée ou une moyenne d'amplitude issue du signal de mesure ou du signal validé si cette information y est présente.

Suivant des modes de mise en œuvre, le procédé selon l'invention peut comprendre une étape de construction d'image comprenant une attribution de valeurs d'intensités à des paramètres représentatifs correspondant à (ou localisés à) des positions sur ou dans le substrat, lesquelles valeurs d'intensité correspondent à des pixels de l'image.

Avantageusement, le procédé selon l'invention peut comprendre en outre une étape de classification des pixels de l'image en objets logiques pour reconstruire les défauts validés.

En effet, l'image construite indiquant uniquement par pixel la présence ou non de défauts, l'étape de classification des pixels en objets logiques (binaires) permet de reconstruire les défauts et ainsi de les représenter et de les classifier selon leur taille, leur forme, leur localisation, etc. Les objets logiques binaires ainsi obtenus peuvent être traités et analysés selon des méthodes d'analyses statistiques ou de reconnaissance de formes connues.

Des cartes d'objets logiques peuvent ainsi être formées à partir des valeurs caractéristiques. Plusieurs cartes construites à partir de différents types de valeurs caractéristiques représentatives d'un même signal détecté et obtenues en appliquant des traitements différents peuvent être construites et combinées entre elles pour améliorer encore la discrimination et classification des défauts. Aussi, par exemple, plusieurs cartes de défauts correspondants à des valeurs de seuil différentes de signaux validés peuvent être obtenues pour la validation des mesures et l'amélioration de la classification des défauts.

De plus, des cartes d'objets logiques formées à partir des valeurs caractéristiques peuvent être utilisées pour réaliser des analyses statistiques et étudier les caractéristiques de défauts suivant un certain procédé de fabrication des substrats. Les étapes correspondantes du procédé de fabrication peuvent alors être adaptées en fonction de ces analyses.

Des cartes d'intensités de diffusion obtenues de manière classique peuvent être combinées avec des cartes établies suivant le procédé selon l'invention pour l'analyse des défauts d'un substrat.

Le procédé selon l'invention permet également de créer et comparer des images correspondant à des valeurs caractéristiques ou de visibilité validées par des niveaux de seuils différents. Les défauts reconstruits en objets logiques peuvent alors apparaitre ou disparaitre entièrement ou partiellement puisque les images obtenues peuvent présenter des niveaux de contraste ou de dynamique différents. Les seuils de validation choisis peuvent alors être confirmés ou modifiés. Ainsi, l'analyse et la classification des défauts peuvent être améliorées.

En outre, le procédé selon l'invention permet de comparer des images, ou cartes, correspondant à des valeurs caractéristiques et/ou à des images d'intensité obtenues directement par la diffusion de la lumière par le substrat. Les images d'intensité dépendent des conditions d'illumination du substrat, telles que l'intensité lumineuse, la polarisation des faisceaux lumineux, leur angle d'incidence, et des caractéristiques des défauts. La combinaison de cartes de valeurs caractéristiques validés par un seuil de détection de présence de fréquence de modulation attendue avec des cartes d'intensité mesurée directement permet, par exemple, de recueillir des informations telles que la rugosité du substrat, et d'inspecter des substrats transparents aux longueurs d'ondes d'illumination en distinguant des défauts présents en surface ou dans le volume du substrat et/ou sur les deux faces du substrat. La comparaison de ces cartes permet aussi de pouvoir distinguer la nature des défauts, leurs structures ou leurs tailles.

Avantageusement, le procédé selon l'invention peut être utilisé pour l'inspection de substrats opaques ou transparents à la longueur d'onde d'inspection. Dans le cas d'un substrat opaque, seule la surface en regard du volume de mesure peut être inspectée.

En particulier, le procédé selon l'invention peut être mis en œuvre pour l'inspection d'une plaquette transparente ou opaque pour l'électronique, l'optique ou l'optoélectronique, et en particulier pour la représentation de l'ensemble des défauts présents sur une surface d'une telle plaquette.

Suivant un autre aspect de l'invention, il est proposé un système d'inspection d'un substrat selon la revendication 13.

Le module de traitement peut être intégré au module de mesure, ou être externe au module de mesure et relié au module de mesure de manière filaire ou sans fil.

Suivant des modes de réalisation, le système de l'invention peut comprendre un dispositif de mise en rotation du substrat autour d'un axe de rotation perpendiculaire à une surface principale dudit substrat, et un dispositif de translation du dispositif interférométrique agencé pour déplacer le volume de mesure dans une direction radiale relativement à l'axe de rotation.

Il est à noter que dans ce cas, si le substrat est mis en rotation à vitesse constante, la fréquence de modulation attendue dépend de la position radiale du volume de mesure relativement à l'axe de rotation.

**Description des figures et modes de réalisation**

D'autres avantages et caractéristiques de l'invention apparaîtront à la lecture de la description détaillée de mises en œuvre et de modes de réalisation nullement limitatifs, et des figures annexées dans lesquelles :

- la Figure 1 est une représentation schématique d'un exemple de réalisation non limitatif d'un système selon l'invention ;
- la Figure 2 est une représentation schématique d'un mode de réalisation non limitatif d'un procédé de mesure selon l'invention ;
- la Figure 3 montre un exemple d'une bouffée Doppler présente dans un signal de mesure acquis pendant l'inspection d'un substrat ;

- les Figures 4a-4d représentent un exemple d'attribution de valeur caractéristique selon une étape du procédé selon l'invention ;
- les Figures 5a-5d représentent un autre exemple d'attribution de valeur caractéristique selon une étape du procédé selon l'invention ;
- la Figure 6a-6d représentent un autre exemple d'attribution de valeur caractéristique selon une étape du procédé selon l'invention ;
- les Figures 7a et 7b montrent des exemple d'histogrammes pour la détermination de seuil de bruit ;
- les Figures 8a et 8b montrent des exemples d'inspection non limitatifs d'un substrat avec le procédé de la présente invention ;
- la Figure 9 est une représentation schématique d'un autre mode de réalisation non limitatif du procédé de mesure selon l'invention ; et
- la Figure 10 montre un exemple d'inspection non limitatif d'un substrat avec le procédé de la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les modes de réalisation présentés, un substrat à inspecter selon le procédé de la présente invention peut être toute plaquette destinée à être utilisée dans le domaine de l'électronique, de l'optique ou de l'optoélectronique. La plaquette peut avoir une circonférence circulaire ou de toute autre forme conforme à l'application souhaitée de la plaquette.

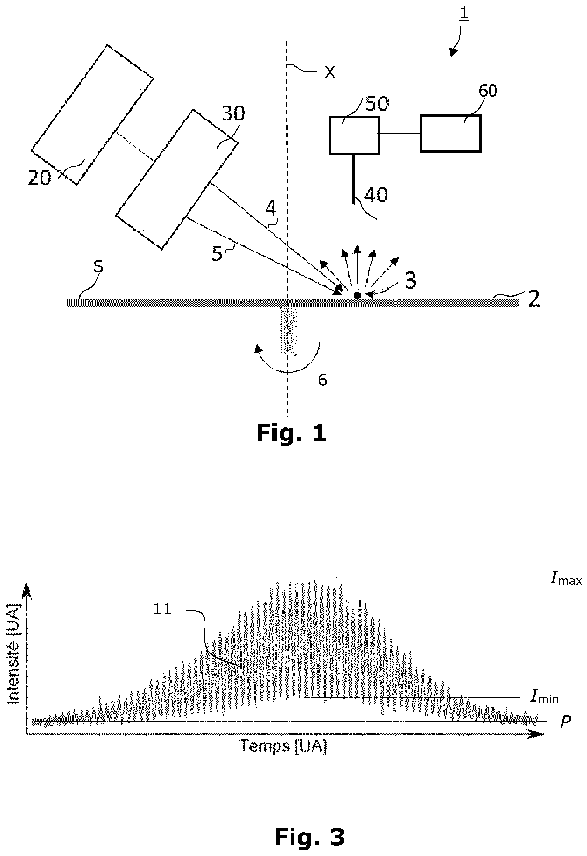

La Figure 1 illustre schématiquement un exemple d'un système d'inspection selon l'invention.

Le système 1 comprend une source lumineuse 20 et un dispositif interférométrique 30 couplé à la source lumineuse agencé en regard d'une surface S du substrat 2 à inspecter.

Le dispositif interférométrique 30 comprend un dispositif destiné à séparer la lumière émise par la source lumineuse 20 en deux faisceaux 4 et 5.

Ce dispositif interférométrique 30 peut être réalisé avec des éléments optiques massifs, soit par exemple un cube séparateur, des miroirs de renvoi et des optiques de focalisation.

Il peut également être réalisé avec un coupleur à fibres optiques qui dirige la lumière injectée dans une fibre optique vers deux autres fibres optiques et des optiques de focalisation formant les deux faisceaux 4 et 5.

Il peut également être réalisé avec un guide de lumière en optique planaire dont l'entrée est couplée à la source lumineuse 20 et comprenant deux branches pour diviser le faisceau issu de la source lumineuse 20 en deux faisceaux incidents 4 et 5.

Dans tous les cas, les faisceaux incidents 4, 5 sont orientés l'un par rapport à l'autre de sorte à se croiser et former, à leur intersection, un volume de mesure comprenant une pluralité de franges d'interférence parallèles, ou au moins orientées essentiellement selon une direction déterminée par les directions d'incidences des faisceaux 4, 5. Les faisceaux 4, 5 peuvent être mis en forme par des optiques de focalisation. Ils peuvent, en particulier, être focalisés de sorte que leur intersection formant le volume de mesure corresponde au point de focalisation ou *« waist »* (en anglais) de ces faisceaux, de sorte à minimiser la taille du volume de mesure. Différents états de polarisation de la lumière peuvent être utilisés.

La source lumineuse 20 est un laser ayant une longueur de cohérence adaptée pour créer le volume de franges d'interférence.

Dans les modes de réalisation présentés, le substrat 2 en entrainé en rotation autour d'un axe de rotation ou de symétrie X perpendiculaire à la surface S. En pratique, le substrat 2 est posé et maintenu sur un support approprié, de type *« chuck »* (en anglais), non représenté. Le support est mobile et entrainé en rotation, par exemple par un moteur. Il comprend un capteur, par exemple de type codeur angulaire, permettant de connaitre la position angulaire du substrat en fonction du temps.

Un module de détection 50 du système 1 permet de collecter et recevoir la lumière diffusée par le substrat 2 et de générer un signal de mesure à partir de la lumière collectée. Le module de détection 50 comprend notamment un photodétecteur, par exemple de type photodiode, photodiode avalanche, CCD ou CMOS. Le signal de mesure reproduit la variation de l'intensité lumineuse, correspondant aux franges d'interférence, de la lumière collectée en fonction du temps.

Le système 1 tel que représenté sur la Figure 1 comprend en outre une fibre optique 40 agencée entre la surface S du substrat 2 et le module de détection 50, de sorte à collecter et guider vers le module de détection 50 la lumière diffusée. Des éléments, non représentés sur la figure 1, peuvent être placés entre le substrat 2 et la fibre optique 40 afin d'augmenter la quantité de lumière collectée par la fibre. Ces éléments peuvent être, notamment, des lentilles ou des miroirs concaves. Il peut s'agir en particulier de miroirs reproduisant au moins de manière partielle une forme elliptique avec respectivement le volume de mesure et l'extrémité de la fibre optique 40 (ou une optique de collimation placée en regard de cette fibre optique 40) positionnés aux foyers de cette ellipse. Ainsi, la fibre optique 40 peut collecter la lumière diffusée sur des portions d'angles solides importantes.

Lorsqu'un défaut 3 ou une particule traverse le volume de mesure avec les franges d'interférence, le signal de mesure obtenu par l'élément de détection 50 comprend une bouffée Doppler avec une composante fréquentielle à une fréquence de modulation modulée par une enveloppe.

Un exemple d'une telle bouffée modulée est représenté sur la Figure 3. Le signal 11 peut être exprimé par exemple sous la forme d'une tension électrique (en Volts) en sortie du module de détection 50 en fonction du temps, ou un signal équivalent numérisé.

Une telle bouffée Doppler peut être représentée sous la forme d'un signal 11 présentant une double composante fréquentielle : une composante de fréquence basse, formant l'enveloppe du signal, correspondant à l'intensité lumineuse moyenne diffusée par le défaut, et une composante de fréquence haute, à une fréquence de modulation, contenant l'information sur la vitesse du défaut. La fréquence haute $f_D$, également appelée fréquence Doppler, est liée à la vitesse v de déplacement du défaut dans la direction perpendiculaire aux franges et à la distance $\Delta$ entre les franges d'interférence par la relation suivante : $f_D = v/\Delta$. La Figure 3 illustre également les paramètres suivants d'une bouffée : les maxima des enveloppes $I_{max}$ et $I_{min}$ et l'offset P du signal.

Le substrat 2 est installé sur un support en rotation dont la vitesse angulaire est connue et mesurée. En plus du déplacement en rotation, un système de déplacement radial (non représenté) qui déplace le substrat 2 et son support, ou l'ensemble optique avec le dispositif interférométrique 30 et la fibre optique 40 du module de détection 50, permet au volume de franges d'interférence de parcourir toute la surface du substrat, par exemple suivant un déplacement en spirale. Si la vitesse de rotation du substrat 2 est maintenue constante, ce qui est le plus aisé à réaliser, la vitesse avec laquelle un défaut 3 traverse le volume de mesure avec les franges d'interférence dépend de sa position radiale par rapport à l'axe de symétrie X. Dans ce cas, selon la relation présentée ci-dessus, la fréquence Doppler $f_D$ diminuea lorsque les défauts sont plus près du centre du substrat 2. Bien entendu, il est également possible d'utiliser une vitesse de rotation variable. Par exemple, une vitesse de rotation continûment décroissante lorsque le volume de mesure s'éloigne de l'axe de symétrie X permet d'obtenir une fréquence Doppler $f_D$ constante.

Le volume de mesure, ou volume des franges d'interférence, s'étend dans une région du substrat qui englobe la surface S. De préférence, les faisceaux incidents 4, 5 sont agencés de sorte que la dimension perpendiculaire à la surface S du volume de mesure est inférieure à l'épaisseur du substrat 2. A titre d'exemple, pour un substrat d'environ 1 mm d'épaisseur, la dimension du volume de mesure peut être d'environ 50 $\mu$m.

Comme expliqué précédemment, un défaut présent sur la surface S dans le volume de mesure génère un signal de mesure (la bouffée Doppler) avec un contenu fréquentiel différent d'un signal de mesure généré par un défaut présent dans le volume du substrat ou sur la surface opposée, et qui ne traverse pas le volume de mesure. En effet, dans ce cas le signal de mesure ne comprend pas de fréquence de modulation.

La position du volume de mesure avec les franges d'interférence par rapport au substrat 2 est connue en fonction du temps. Ainsi, il est possible de calculer la fréquence de modulation attendue, correspondant à la fréquence Doppler $f_D$ correspondant à la présence d'un défaut.

Enfin, toujours en référence à la Figure 1, le système d'inspection 1 selon l'invention comprend un dispositif 60 de traitement, tel qu'un microprocesseur ou un ordinateur par exemple, relié au dispositif interférométrique 30 et/ou au module de détection 50 et configuré pour mettre en œuvre toutes les étapes d'un procédé pour l'inspection d'un substrat, telles que par exemple les étapes 106-124 du procédé 100 ou les étapes 206-224 du procédé 200 décrits par la suite.

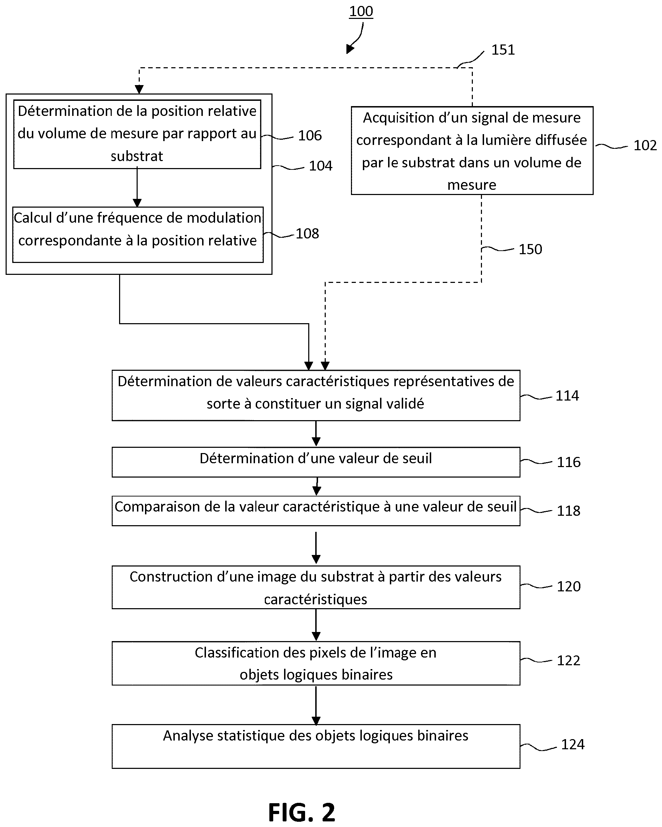

La Figure 2 est une représentation schématique d'un mode de réalisation non limitatif d'un procédé d'inspection d'un substrat selon l'invention.

Le procédé 100, représenté sur la Figure 2, comprend une étape 102 d'acquisition d'un signal de mesure correspondant à la lumière diffusée par la région du substrat traversant un volume de mesure. Le signal de mesure reflète l'intensité diffusée par le substrat en fonction du temps. Comme détaillé ci-dessus, le volume de mesure est créé à partir de deux faisceaux lumineux interférents. Le substrat tourne autour de son axe de symétrie (X) à une vitesse angulaire connue.

Le procédé 100 comprend en outre une étape 104 de détermination d'une fréquence de modulation attendue correspondante à une position relative du volume de mesure par rapport au substrat. Cette fréquence de modulation attendue est la fréquence Doppler qui est une fonction de la vitesse avec laquelle un défaut traverse le volume de mesure et de la position sur le substrat à laquelle le défaut se trouve. Pour réaliser cette étape 104 du procédé, il est donc nécessaire de déterminer la position relative du volume de mesure par rapport au substrat à l'étape 106 et d'en déduire la vitesse d'un défaut traversant le volume de mesure à cette position relative. Lors d'une étape 108, la fréquence de modulation correspondante à la position relative peut ensuite être calculée.

Selon un mode de réalisation du procédé 100, l'étape 104 de détermination de la fréquence de modulation peut être réalisée en parallèle ou lors de l'étape 102 d'acquisition du signal de mesure, comme indiqué par la flèche 150 sur la Figure 2.

Selon un autre mode de réalisation, l'étape 104 de détermination de la fréquence de modulation attendue peut être réalisée après que l'étape 102 d'acquisition du signal de mesure soit partiellement ou complètement terminée, c'est-à-dire en utilisant des signaux de mesure sauvegardés.

Le procédé 100 selon le mode de réalisation représenté comprend en outre une étape 114 de calcul d'un signal validé représentatif de la présence de défauts 3, qui comprend une détermination de valeurs caractéristiques représentatives d'un contenu fréquentiel du signal de mesure dans un voisinage autour de la fréquence de modulation attendue.

Une fois l'étape 114 de calcul d'un signal validé effectuée, le procédé 100 selon le mode de réalisation représenté sur la Figure 1 continu avec l'étape 116 lors de laquelle une valeur de seuil des valeurs caractéristiques est déterminée, laquelle valeur de seuil est également appelée seuil. Bien entendu, cette étape 116 de détermination de valeur de seuil peut ne pas être réalisée à chaque itération. De préférence, elle est réalisée dans une phase préalable, par exemple sur des substrats de test, ou lors de mesures de test.

Lors d'une étape 118, le signal validé est comparé à la valeur de seuil.

On peut considérer par exemple que le signal validé est effectivement représentatif d'un défaut réel lorsqu'il est supérieur à la valeur de seuil. On peut alors par exemple mettre toutes les valeurs inférieures à la valeur de seuil à zéro ou à une valeur déterminée pour ne conserver dans le signal validé que les valeurs caractéristiques effectivement représentatives d'un défaut.

Des exemples de détermination de valeurs caractéristiques et de détermination de la valeur de seuil sont donnés ci-dessous.

Selon une première approche, un signal attendu, correspondant à une bouffée Doppler idéale est modélisée, par exemple, comme une fonction sinusoïdale à une fréquence de modulation attendue modulée en amplitude par une fonction Gaussienne. Le signal modélisé contient également une composante continue, à laquelle s'ajoute un bruit. On peut estimer les paramètres de ce signal idéal, tels que illustrés sur la Figure 3. Il est alors possible de calculer un rapport de vraisemblance entre la bouffée Doppler idéale et un signal mesuré supposé contenir la fréquence de modulation attendue. Plus le signal mesuré ressemble à la bouffée idéale, plus le rapport de vraisemblance est grand.

Le rapport de vraisemblance R peut, par exemple, être défini de la façon suivante :

$$ R = \frac{\exp(-\frac{\|f_{mes.} - f_{est.}\|^2}{\sigma_\omega^2})}{\exp(-\frac{\|f_{mes.}\|^2}{\sigma_\omega^2})} $$

Dans cette équation, $f_{mes.}$ est le signal mesuré, $f_{est.}$ est le signal idéal estimé et $\sigma_\omega$ est l'écart type représentatif d'un bruit résiduel entre le signal estimé et le signal mesuré. $\| \|$ représente la norme Euclidienne.

Le rapport peut être simplifié et exprimé sous forme logarithmique :

$$ r = \ln(R) = \frac{\|f_{mes.}\|^2 - \|f_{mes.} - f_{est.}\|^2}{\sigma_\omega^2} $$

Il apparait que le rapport $r$ augmente lorsque le bruit diminue et/ou lorsque le signal estimé se rapproche du signal mesuré ($f_{est.} = f_{mes.}$).

Le rapport de vraisemblance peut être utilisé comme valeur caractéristique. Un rapport de vraisemblance minimum peut être choisi pour constituer la valeur de seuil.

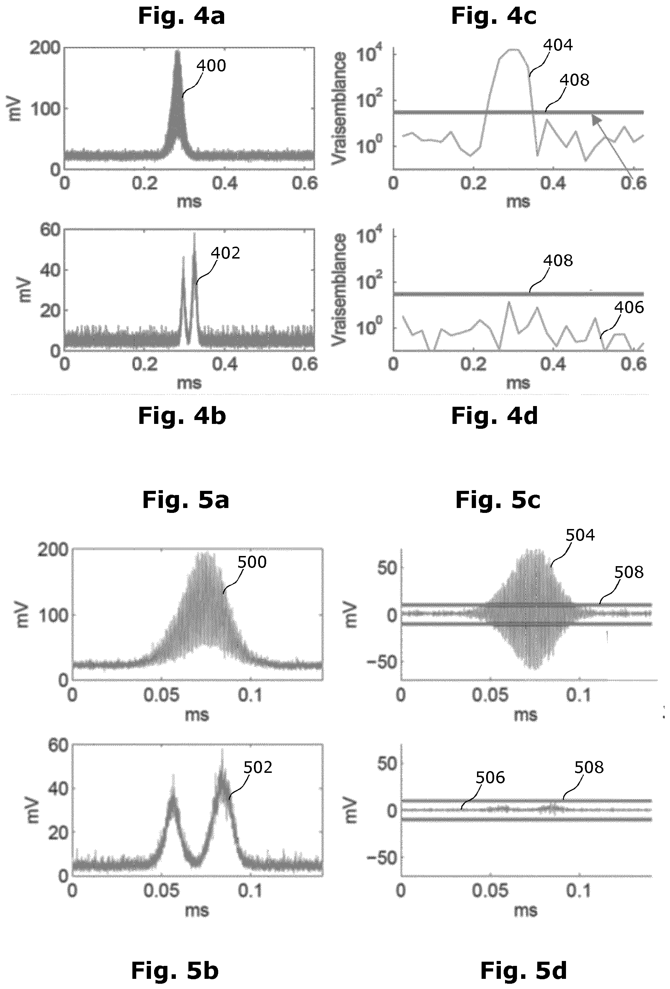

Les Figures 4a et 4b représentent des signaux de mesure 400, 402 acquis, par exemple, à l'étape 102 du procédé représenté à la Figure 2, exprimés en une tension électrique (mV) en fonction du temps (ms). Le signal 400 de la Figure 4a correspond à une particule qui traverse le volume de mesure, et contient la fréquence de modulation attendue. Le signal 402 de la Figure 4b correspond à une particule qui génère une diffusion mais qui ne traverse pas le volume de mesure (par exemple une particule présente sur une autre face du substrat 2) Il ne contient donc pas la fréquence de modulation attendue. Ceci est vérifié en calculant le rapport de vraisemblance comme détaillé ci-dessus.

Les résultats du calcul sont représentés sur les Figures 4c et 4d respectivement. Lorsque le signal de mesure contient une bouffée Doppler, le rapport de vraisemblance 404 augmente et dépasse une valeur de seuil 408 (Figure 4c). Dans le cas contraire, le rapport de vraisemblance 406 constitue uniquement du bruit et ne dépasse pas la valeur de seuil 408 (Figure 4d). On peut donc conclure que le signal de mesure 402 de la Figure 4b n'est pas dû à un élément traversant le volume de mesure.

Selon une deuxième approche de détermination de valeurs caractéristiques d'un signal de mesure, un filtrage passe-bande du signal de mesure est effectué. La bande passante du filtre est adaptée pour ne transmettre que la partie du signal de mesure autour de la fréquence de modulation attendue. Les autres fréquences éventuellement présentes dans le signal sont donc atténuées ou rejetées. La valeur de seuil peut ensuite être choisie pour ne conserver que les signaux validés avec une amplitude de modulation à la fréquence de modulation attendue supérieure à une valeur minimale et rejeter les autres signaux.

Les Figures 5a et 5b illustrent, respectivement, des signaux de mesure 500, 502, le premier contenant une bouffée Doppler, le second ne contenant pas la fréquence de modulation attendue. Les signaux validés correspondants issus du filtrage passe-bande 504, 506 sont montrés sur les Figures 5c et 5d, respectivement. La valeur caractéristique représentative peut être, par exemple, la valeur d'amplitude de la modulation du signal filtré 504, 506 ou une valeur de visibilité représentant le rapport de l'amplitude de modulation du signal filtré sur la valeur continue du signal de mesure non filtré. La valeur de seuil 508 peut être déterminée comme étant une valeur minimale de la valeur caractéristique acceptée comme étant représentative d'un défaut réel, comme illustré sur les Figures 5c et 5d.

Selon une troisième approche de détermination de valeurs caractéristiques d'un signal de mesure, une détection spectrale peut être effectuée en réalisant localement une transformée de Fourier du signal de mesure, par exemple dans une fenêtre temporelle glissante. Dans le spectre obtenu, le pic correspondant à la fréquence de modulation attendue peut être choisi comme la valeur caractéristique représentative de la présence réelle d'une bouffée Doppler. De même que précédemment, on peut déterminer un seuil de sorte que la valeur de l'amplitude de ce pic doive être supérieure à une valeur de seuil pour être représentative de la présence d'un défaut réel. Pour tenir compte de la modulation d'amplitude de l'enveloppe, il est aussi possible de choisir comme valeur caractéristique une mesure de l'énergie ou de la puissance dans une bande spectrale englobant la fréquence de modulation attendue.

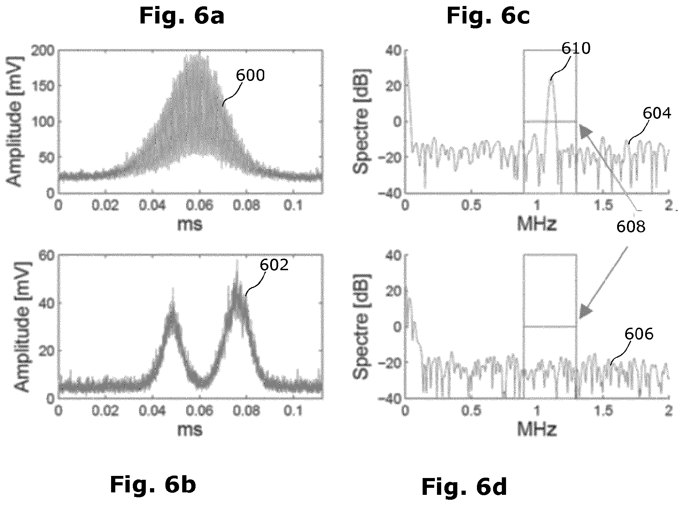

Un exemple de cette approche est illustré sur les Figures 6a-6d. Des signaux mesurés 600, 602 (Figures 6a et 6b) ainsi que leurs spectres respectifs 604, 606 (Figures 6c et 6d, en dB) sont montrés. Dans l'exemple représenté, le spectre 604 du signal 600 contenant une bouffée Doppler présente un pic 610 correspondant à la fréquence de modulation attendue. La valeur de seuil 608 est choisie pour ne retenir que les parties du signal validé qui contiennent une composante spectrale d'amplitude supérieure au seuil à la fréquence de modulation attendue. Dans le spectre 606 du signal 602 ne contenant pas la bouffée Doppler, aucun pic à part celui de la composante continue (0 MHz) ne peut être distingué.

D'autres approches pour l'attribution de la valeur caractéristique peuvent également être utilisées.

Par la suite, le choix de la valeur de seuil est considéré plus en détails.

De manière générale, la valeur de seuil dépend à la fois de la probabilité *a priori* qu'un défaut ou une particule soit présent sur ou dans le substrat et du coût d'une fausse détection et d'une non-détection, pour le nombre desquelles un compromis peut être trouvé. La valeur de seuil dépend également de la fréquence des bouffées Doppler, du rapport signal sur bruit des bouffées Doppler détectées et du type de bruit considéré. Il s'agit de détecter des signaux faibles sans que le bruit dans les signaux de mesure n'entraine trop de fausses détections. En outre, la valeur de seuil peut être fixe ou adaptatif en fonction du critère de choix privilégié. Afin de déterminer une valeur de seuil prenant en compte les contraintes du système d'inspection, une étude statistique sur des substrats ou des zones d'étalonnage peut être réalisée. Cette étude consiste à observer un histogramme des valeurs caractéristiques obtenues lors d'une inspection de plaquettes propres (c'est-à-dire exemptes de sources de diffusion) ou avec des dépôts de sphères de caractéristiques bien définies. La valeur de seuil peut être déterminée de façon à pouvoir détecter le plus de défauts possibles, tout en évitant au mieux les fausses alarmes.

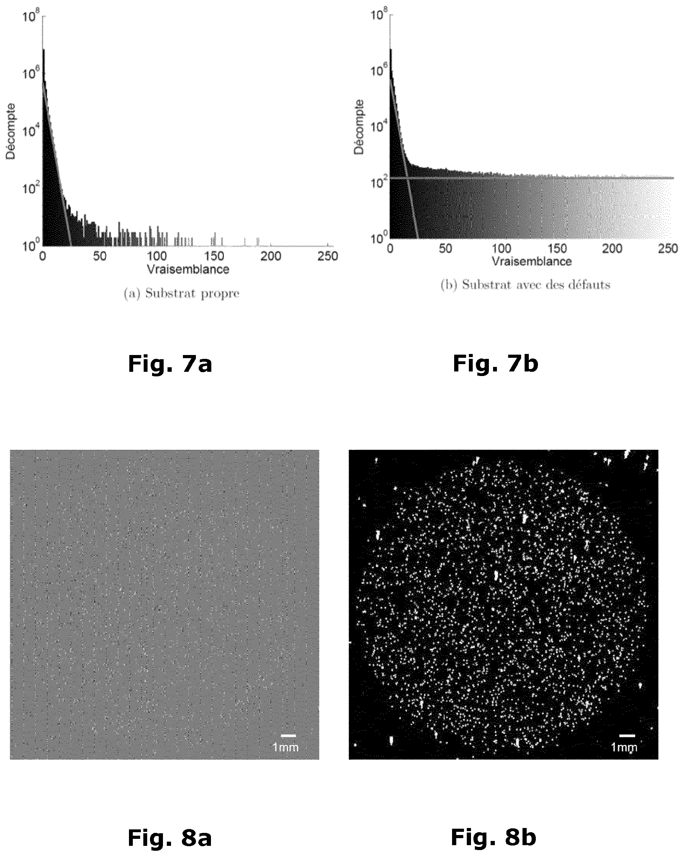

Les Figures 7a et 7b illustrent des histogrammes de valeurs caractéristiques obtenues en calculant des rapports de vraisemblance pour deux substrats.

Pour la Figure 7a, le substrat est supposé propre, ou au moins comprend très peu de particules, les substrats n'étant jamais parfaitement propres. L'histogramme illustre la distribution des valeurs caractéristiques calculées, qui correspond essentiellement au niveau de bruit du système d'inspection.

Pour la Figure 7b, le substrat est pollué avec des particules. L'histogramme montre une très forte décroissance de l'occurrence des valeurs caractéristiques dans les faibles niveaux correspondant au bruit, et une zone plate recouvrant tout l'histogramme et correspondant aux détections de défauts. On visualise ainsi, en plus des fausses détections, les détections réelles correspondant à des bouffées Doppler provoquées par des défauts réels.

Connaissant la tendance de décroissance du bruit à l'aide de l'histogramme de la Figure 7a correspondant au substrat propre, il est possible de déterminer une valeur de seuil optimale pour à la fois détecter le plus de bouffées Doppler possibles et éviter un maximum de fausses détections. Dans l'exemple illustré, la valeur de seuil peut être établie avec un rapport de vraisemblance entre 20 et 50, par exemple. Ce seuil peut être établi par exemple en recherchant l'intersection avec l'axe des abscisses de l'histogramme d'une droite représentative de la décroissance des occurrences pour les valeurs caractéristiques faibles correspondant au bruit.

On peut observer que le seuil établi avec le substrat propre est applicable aux mesures effectuées sur le substrat pollué comme illustré à la figure 7b.

La valeur de seuil peut également varier en fonction des paramètres du volume de mesure, de la vitesse de rotation du substrat et de la densité des défauts sur les substrats inspectés. Lorsque le système ou le procédé d'acquisition des signaux est changé de manière importante, il peut être nécessaire de vérifier et réajuster la valeur de seuil.

Bien entendu, le seuil de détection peut être établi de toute autre manière, par exemple en analysant des fausses détections, et/ou des absences de détection sur des échantillons connus.

Les bouffées Doppler dont les valeurs caractéristiques respectives sont supérieures à la valeur de seuil choisie sont considérées comme des bouffées validées lors de l'étape 116 du procédé 100, c'est-à-dire indiquant des présences réelles de défauts sur le substrat.

Toujours en référence à la Figure 2, lors d'une étape 120 du procédé 100 selon l'invention, les valeurs caractéristiques associées aux bouffées validées et donc représentatives de défauts réels sont associées aux positions sur le substrat auxquelles elles ont été détectées pour former une image. Pour ce faire, chaque pixel de l'image est associé à une valeur d'intensité correspondant à la valeur caractéristique. Par exemple, la valeur 1 peut être associée à une valeur caractéristique d'une bouffée validée, et la valeur 0 peut être associée à une bouffée non validée, c'est-à-dire dont la valeur caractéristique ne dépasse pas le niveau de seuil choisi.

Les Figures 8a et 8b illustrent l'étape 120 du procédé 100.

La Figure 8a montre le signal de mesure, représenté en niveaux de gris. La Figure 8b montre le signal validé après application du seuil sur ce même substrat. La valeur caractéristique utilisée dans la Figure 8b est le rapport de vraisemblance. On observe bien la capacité de discrimination (détection de « vrai » défauts) du signal validé.

Le procédé 100 selon le mode de réalisation représenté sur la Figure 2 comprend en outre une étape 122 de classification des pixels de l'image construite avec les valeurs caractéristiques en objets logiques binaires (appelés *« blob »* selon le terme anglo-saxon « *binary large object* »). Cette étape 122 permet de regrouper les pixels en défauts. Des méthodes connues de traitement et d'analyse statistique d'images peuvent être utilisées pour réaliser cette étape.

Lors d'une étape 124, pour chaque blob ou défaut, ses paramètres et caractéristiques physiques sont analysés statistiquement. Ces paramètres et caractéristiques peuvent inclure, par exemple, l'aire, la forme, l'ellipticité, l'orientation, la vraisemblance (si cette valeur caractéristique a été utilisée), etc. Des reconnaissances de forme peuvent aussi être effectuées.

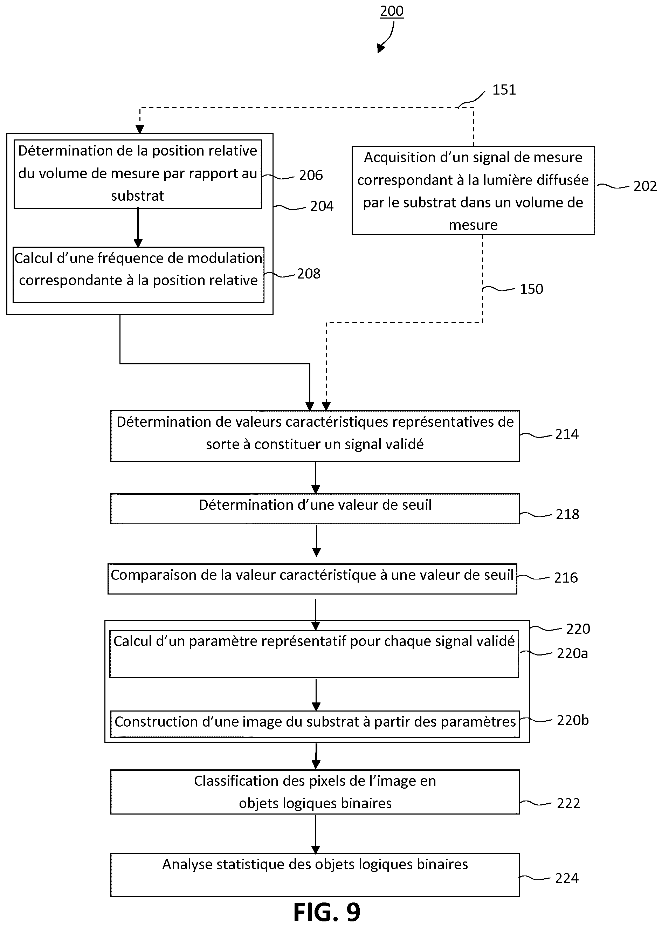

La Figure 9 est une représentation schématique d'un autre mode de réalisation non limitatif du procédé d'inspection d'un substrat selon l'invention.

Les étapes 202 à 218, 222 et 224 du procédé 200, représenté sur la Figure 9, sont identiques aux étapes 102 à 118, 122 et 124 du procédé 100, représenté sur la Figure 2, et ne seront donc pas décrites dans la suite.

Une fois les bouffées Doppler validées en comparant le signal validé ou les valeurs caractéristiques respectives aux valeurs de seuil à l'étape 218, lors d'une étape 220a, un paramètre représentatif des bouffées validées est déterminé. Ce paramètre représentatif peut être déduit du signal validé, et/ou du signal de mesure pour les bouffées Doppler validées sur la base du signal validé. Ce paramètre représentatif peut être, par exemple, un rapport de vraisemblance issu du signal validé, ou la visibilité, l'amplitude de modulation de la bouffée, l'amplitude maximum de la bouffée ou une moyenne d'amplitude issue du signal de mesure ou du signal validé si cette information y est présente.

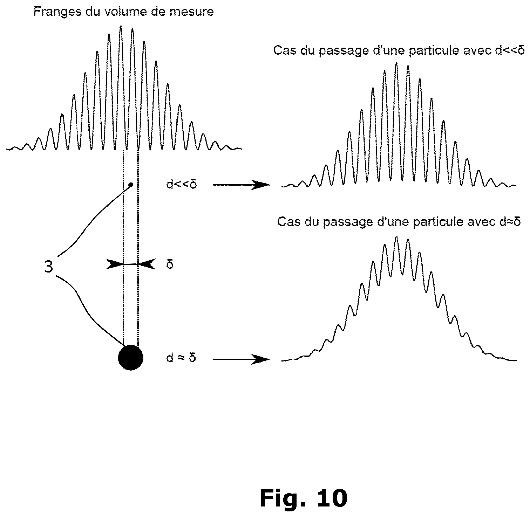

A titre d'exemple, il est possible d'obtenir, à partir de l'amplitude de modulation à la fréquence de modulation caractéristique de passage d'un défaut, la taille du défaut traversant le volume de mesure. Cette relation est représentée sur la Figure 10, avec un défaut circulaire 3 ayant un diamètre *d*. Plus la taille *d* du défaut 3 est grande par rapport à la distance $\delta$ interfrange dans le volume de mesure, plus le rapport entre l'amplitude de modulation et le maximum de l'enveloppe du signal de mesure, correspondant au contraste, est petit.

L'amplitude de modulation peut être calculée de différentes façons. Une méthode est décrite dans W. M. Farmer, « Measurement of Particle Size, Number Density, and Velocity using a Laser Interferometer », Appl. Opt., 11, pp. 2603-2612, 1972. L'amplitude de modulation est ramenée à un paramètre de visibilité *V* défini de manière suivante :

$$V = \frac{I_{\max} - I_{\min}}{I_{\max} + I_{\min} - 2P}$$

Les intensités $I_{\max}$ et $I_{\min}$ ainsi que l'offset *P* sont définis sur la Figure 3. La visibilité *V* est ensuite utilisée pour en déduire directement le diamètre d'une particule.

A la suite de l'étape 220a, lors d'une étape 220b, une image est construite en associant le paramètre représentatif, tel que la visibilité, de chaque bouffée validée à une position sur le substrat, de manière similaire à l'étape 120 du procédé 100 décrit en référence à la Figure 2.

Selon un autre mode de réalisation, l'étape de construction d'image du procédé selon l'invention utilise les paramètres représentatifs d'enveloppe des bouffées détectées, issues du signal validé. Ces paramètres représentatifs peuvent être les maxima des enveloppes $I_{max}$, $I_{\min}$ et l'offset *P*, tels qu'illustrés sur la Figure 3. Ces paramètres peuvent être estimés lors de l'étape d'attribution des valeurs caractéristiques, comme décrit précédemment pour le calcul du rapport de vraisemblance. Ainsi, l'amplitude *A* du signal de mesure peut être déduit directement en calculant :

$$A = (I_{\max} + I_{\min})/2.$$

A chaque paramètre A peuvent alors être attribués des valeurs d'intensité d'image, pour construire une carte de défauts validés.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé (100, 200) d'inspection d'un substrat (2), le procédé (100, 200) comprenant les étapes suivantes :

   - création, à partir d'au moins deux faisceaux lumineux (4, 5) issus d'une même source lumineuse (20), d'un volume de mesure à l'intersection entre lesdits au moins deux faisceaux lumineux (4, 5), le volume de mesure contenant des franges d'interférence et étant positionné de sorte à s'étendre sur ou dans le substrat (2), ledit substrat (2) étant en déplacement relativement audit volume de mesure selon une direction parallèle à une surface principale (S) dudit substrat (2) ;
   - acquisition (102, 202) d'un signal de mesure représentatif de la lumière diffusée par le substrat (2), en fonction de la localisation du volume de mesure sur ledit substrat (2) ;
   - calcul (108, 208) d'au moins un paramètre attendu, dont au moins une fréquence de modulation attendue étant une fréquence Doppler attendue, d'un signal attendu représentatif du passage d'un défaut (3) dudit substrat (2) dans le volume de mesure ;
   - détermination (114, 214) de valeurs caractéristiques représentatives d'un contenu fréquentiel du signal de mesure dans un voisinage autour de la fréquence de modulation attendue, de sorte à constituer un signal validé représentatif de la présence de défauts (3), l'étape (114, 214) de détermination des valeurs caractéristiques comprenant les étapes suivantes :

      - modélisation du signal attendu selon une fonction modèle, pour produire un signal modélisé ;
      - comparaison du signal modélisé au signal de mesure, incluant le calcul d'une distance au sens d'une norme euclidienne entre le signal modélisé et le signal de mesure ; et

   - analyse dudit signal validé pour localiser et/ou identifier des défauts (3).

2. Procédé (100, 200) selon la revendication 1, **caractérisé en ce qu'**il comprend en outre les étapes de :

   - détermination (116, 216) d'une valeur de seuil des valeurs caractéristiques ; et
   - comparaison (118, 218) du signal validé à ladite valeur de seuil.

3. Procédé (100, 200) selon la revendication 2, **caractérisé en ce que** l'étape de détermination (116, 216) d'une valeur de seuil est réalisée à partir d'un signal validé obtenu avec un substrat (2) de test de caractéristiques connues.

4. Procédé (100, 200) selon l'une des revendications 1 à 3, **caractérisé en ce que** l'étape (114, 214) de détermination des valeurs caractéristiques comprend un filtrage passe-bande du signal de mesure selon une bande passante adaptée pour ne transmettre que le contenu fréquentiel du signal de mesure dans un voisinage autour de la fréquence de modulation attendue.

5. Procédé (100, 200) selon la revendication 4, **caractérisé en ce que** la valeur caractéristique prend en compte :

   - l'amplitude de modulation du signal de mesure filtré ; ou
   - le rapport entre l'amplitude de modulation du signal de mesure filtré et une valeur continue du signal de mesure.

6. Procédé (100, 200) selon l'une des revendications 1 à 3, **caractérisé en ce que** l'étape (114, 214) de détermination des valeurs caractéristiques comprend les étapes suivantes :

   - calcul d'une transformée de Fourier locale du signal de mesure pour obtenir une densité spectrale de puissance locale ;
   - détermination d'une valeur caractéristique à partir de la densité spectrale de puissance à, ou dans un voisinage comprenant, la fréquence de modulation attendue.

7. Procédé (100, 200) selon l'une quelconque des revendications précédentes, **caractérisé en ce qu'**il comprend en outre une étape (120, 220) de construction d'image du substrat (2) en utilisant le signal validé.

8. Procédé (100, 200) selon la revendication 7, **caractérisé en ce que** l'étape (120) de construction d'image comprend une étape d'attribution de valeurs d'intensité à des valeurs caractéristiques correspondant à des positions sur ou dans le substrat (2), lesquelles valeurs d'intensité correspondant à des pixels de l'image.

9. Procédé (100, 200) selon l'une quelconque des revendications précédentes, **caractérisé en ce qu'**il comprend une étape (220a) de détermination d'un paramètre représentatif déduit du signal de mesure et/ou du signal validé.

**10.** Procédé (100, 200) selon la revendication 9, **caractérisé en ce qu'**il comprend une étape (220b) de construction d'image comprenant une attribution de valeurs d'intensité à des paramètres représentatifs correspondant à des positions sur ou dans le substrat (2), lesquelles valeurs d'intensité correspondant à des pixels de l'image.

**11.** Procédé (100, 200) selon l'une des revendication 8 à 10, **caractérisé en ce qu'**il comprend en outre une étape (122, 222) de classification des pixels de l'image en objets binaires pour reconstruire les défauts validés.

**12.** Procédé (100, 200) selon l'une quelconque des revendications précédentes, **caractérisé en ce qu'**il est mis en œuvre pour l'inspection d'une plaquette (2) transparente ou opaque pour l'électronique, l'optique ou l'optoélectronique.

**13.** Système (1) d'inspection d'un substrat (2), le système (1) comprenant :

    - un dispositif interférométrique (30) couplé à une source lumineuse (20) pour créer, à partir de au moins deux faisceaux lumineux (4, 5) issus de la source lumineuse (20), un volume de mesure à l'intersection entre lesdits au moins deux faisceaux lumineux (4, 5), le volume de mesure contenant des franges d'interférence et étant positionné de sorte à s'étendre sur ou dans le substrat (2) ;
    - un dispositif de mise en déplacement dudit substrat (2) relativement audit volume de mesure selon une direction parallèle à une surface principale (S) dudit substrat ;
    - un dispositif optoélectronique (50) d'acquisition d'un signal de mesure représentatif de la lumière diffusée par le substrat (2), en fonction de la localisation du volume de mesure sur ledit substrat ;

le système comprenant en outre un module de traitement (60) agencé pour :

    - effectuer un calcul (108, 208) d'au moins un paramètre attendu, dont au moins une fréquence de modulation attendue étant une fréquence Doppler attendue, d'un signal attendu représentatif du passage d'un défaut (3) dudit substrat (2) dans le volume de mesure ;
    - effectuer une détermination (114, 214) de valeurs caractéristiques représentatives d'un contenu fréquentiel du signal de mesure dans un voisinage autour de la fréquence de modulation attendue, de sorte à constituer un signal validé représentatif de la présence de défauts (3), où le module de traitement (60) est agencé pour :

        - effectuer une modélisation du signal attendu selon une fonction modèle, pour produire un signal modélisé ;
        - effectuer une comparaison du signal modélisé au signal de mesure, incluant le calcul d'une distance au sens d'une norme euclidienne entre le signal modélisé et le signal de mesure ; et

    - effectuer une analyse dudit signal validé pour localiser et/ou identifier des défauts (3).

**14.** Système (1) selon la revendication précédente, **caractérisé en ce qu'**il comprend un dispositif de mise en rotation du substrat (2) autour d'un axe de rotation (X) perpendiculaire à une surface principale (S) dudit substrat, et un dispositif de translation du dispositif interférométrique (30) agencé pour déplacer le volume de mesure dans une direction radiale relativement à l'axe de rotation (X).

**Patentansprüche**

**1.** Verfahren (100, 200) zum Prüfen eines Substrats (2), das Verfahren (100, 200) umfassend die folgenden Schritte:

    - Produzieren, anhand mindestens zweier Lichtstrahlen (4, 5), die von einer gleichen Lichtquelle (20) stammen, eines Messvolumens an der Schnittstelle zwischen den mindestens zwei Lichtstrahlen (4, 5), wobei das Messvolumen Interferenzstreifen enthält und so positioniert ist, dass es sich auf oder in das Substrat (2) erstreckt, wobei das Substrat (2) relativ zu dem Messvolumen in einer Richtung parallel zu einer Hauptoberfläche (S) des Substrats (2) in Bewegung ist;
    - Erfassen (102, 202) eines Messsignals, das für das von dem Substrat (2) gestreute Licht repräsentativ ist, abhängig von der Lokalisierung des Messvolumens auf dem Substrat (2);
    - Berechnen (108, 208) mindestens eines erwarteten Parameters, von denen mindestens eine erwartete Modulationsfrequenz eine erwartete Dopplerfrequenz ist, eines erwarteten Signals, das einen das Substrat (2) durchlaufenden Fehler (3) in dem Messvolumen repräsentiert;
    - Bestimmen (114, 214) von Kennwerten, die einen Frequenzinhalt des Messsignals in einer Umgebung um die erwartete Modulationsfrequenz darstellen, um ein validiertes Signal zu bilden, das für das Vorhandensein von Fehlern (3) repräsentativ ist, der Schritt (114, 214) des Bestimmens der Kennwerte umfassend die folgenden Schritte:

- Modellieren des erwarteten Signals gemäß einer Modellfunktion, um ein modelliertes Signal zu erzeugen;
- Vergleichen des modellierten Signals mit dem Messsignal, einschließlich der Berechnung eines Abstands im Sinne einer euklidischen Norm zwischen dem modellierten Signal und dem Messsignal; und

- Analysieren des validierten Signals zum Lokalisieren und/oder Identifizieren von Fehlern (3).

2. Verfahren (100, 200) nach Anspruch 1, **dadurch gekennzeichnet, dass** es ferner die Schritte umfasst zum:

- Bestimmen (116, 216) eines Schwellenwerts der Kennwerte; und
- Vergleichen (118, 218) des validierten Signals mit dem Schwellenwert.

3. Verfahren (100, 200) nach Anspruch 2, **dadurch gekennzeichnet, dass** der Schritt des Bestimmens (116, 216) eines Schwellenwerts anhand eines validierten Signals durchgeführt wird, das mit einem Testsubstrat (2) mit bekannten Eigenschaften erhalten wird.

4. Verfahren (100, 200) nach einem der Ansprüche 1 bis 3, **dadurch gekennzeichnet, dass** der Schritt (114, 214) des Bestimmens der Kennwerte eine Bandpassfilterung des Messsignals gemäß einer Bandbreite umfasst, die angepasst ist, um nur den Frequenzinhalt des Messsignals in einer Umgebung um die erwartete Modulationsfrequenz zu übertragen.

5. Verfahren (100, 200) nach Anspruch 4, **dadurch gekennzeichnet, dass** der Kennwert berücksichtigt:

- die Modulationsamplitude des gefilterten Messsignals; oder
- das Verhältnis zwischen der Modulationsamplitude des gefilterten Messsignals und einem kontinuierlichen Wert des Messsignals.

6. Verfahren (100, 200) nach einem der Ansprüche 1 bis 3, **dadurch gekennzeichnet, dass** der Schritt (114, 214) des Bestimmens der Kennwerte die folgenden Schritte umfasst:

- Berechnen einer lokalen Fourier-Transformation des Messsignals, um eine lokale spektrale Leistungsdichte zu erhalten;
- Bestimmen eines Kennwerts aus der spektralen Leistungsdichte bei, oder in einer Umgebung umfassend, die erwartete Modulationsfrequenz.

7. Verfahren (100, 200) nach einem der vorstehenden Ansprüche, **dadurch gekennzeichnet, dass** es ferner einen Schritt (120, 220) zum Erstellen eines Bilds des Substrats (2) unter Verwendung des validierten Signals umfasst.

8. Verfahren (100, 200) nach Anspruch 7, **dadurch gekennzeichnet, dass** der Bilderstellungsschritt (120) einen Schritt eines Zuweisens von Intensitätswerten zu Kennwerten umfasst, die Positionen auf oder in dem Substrat (2) entsprechen, wobei die Intensitätswerte Pixeln des Bilds entsprechen.

9. Verfahren (100, 200) nach einem der vorstehenden Ansprüche, **dadurch gekennzeichnet, dass** es einen Schritt (220a) zum Bestimmen eines repräsentativen Parameters umfasst, der aus dem Messsignal und/oder dem validierten Signal abgeleitet wird.

10. Verfahren (100, 200) nach Anspruch 9, **dadurch gekennzeichnet, dass** es einen Bilderstellungsschritt (220b) umfasst, umfassend eine Zuordnung von Intensitätswerten zu repräsentativen Parametern, die Positionen auf oder in dem Substrat (2) entsprechen, wobei die Intensitätswerte den Pixeln des Bilds entsprechen.

11. Verfahren (100, 200) nach einem der Ansprüche 8 bis 10, **dadurch gekennzeichnet, dass** es ferner einen Schritt (122, 222) zum Klassifizieren der Pixel des Bilds in binäre Objekte umfasst, um die validierten Fehler zu rekonstruieren.

12. Verfahren (100, 200) nach einem der vorstehenden Ansprüche, **dadurch gekennzeichnet, dass** es zum Prüfen einer transparenten oder undurchsichtigen Elektronik-, Optik- oder Optoelektronik-Plaquette (2) durchgeführt wird.

13. System (1) zum Prüfen eines Substrats (2), das System (1) umfassend:

- eine interferometrische Vorrichtung (30), die mit einer Lichtquelle (20) gekoppelt ist, um aus mindestens zwei Lichtstrahlen (4, 5), die von der Lichtquelle (20) stammen, an der Schnittstelle zwischen den mindestens zwei Lichtstrahlen (4, 5) ein Messvolumen zu produzieren, wobei das Messvolumen Interferenzstreifen enthält und positioniert ist, sodass es sich auf oder in das Substrat (2) erstreckt;
- eine Vorrichtung zum Bewegen des Substrats (2) relativ zu dem Messvolumen in einer Richtung parallel zu einer Hauptoberfläche (S) des Substrats;

- eine optoelektronische Vorrichtung (50) zum Erfassen eines Messsignals, das für das von dem Substrat (2) gestreute Licht repräsentativ ist, abhängig von der Lokalisierung des Messvolumens auf dem Substrat;

das System ferner umfassend ein Verarbeitungsmodul (60), das angeordnet ist zum:

- Durchführen einer Berechnung (108, 208) mindestens eines erwarteten Parameters, von denen mindestens eine erwartete Modulationsfrequenz eine erwartete Dopplerfrequenz ist, eines erwarteten Signals, das einen das Substrat (2) durchlaufenden Fehler (3) in dem Messvolumen darstellt;
- Ausführen einer Bestimmung (114, 214) von Kennwerten, die einen Frequenzinhalt des Messsignals in einer Umgebung um die erwartete Modulationsfrequenz herum darstellen, um ein validiertes Signal zu bilden, das für das Vorhandensein von Fehlern (3) repräsentativ ist, oder das Verarbeitungsmodul (60) angeordnet ist zum:

- Ausführen einer Modellierung des erwarteten Signals gemäß einer Modellfunktion, um ein modelliertes Signal zu erzeugen;
- Ausführen eines Vergleichs des modellierten Signals mit dem Messsignal, einschließlich der Berechnung eines Abstands im Sinne einer euklidischen Norm zwischen dem modellierten Signal und dem Messsignal; und

- Ausführen einer Analyse des validierten Signals, um Fehler zu lokalisieren und/oder identifizieren (3).

**14.** System (1) nach dem vorstehenden Anspruch, **dadurch gekennzeichnet, dass** es eine Vorrichtung zum Drehen des Substrats (2) um eine Drehachse (X), die senkrecht zu einer Hauptoberfläche (S) des Substrats ist, und eine Vorrichtung zum Verschieben der interferometrischen Vorrichtung (30) umfasst, die angeordnet ist, um das Messvolumen in einer radialen Richtung relativ zu der Drehachse (X) zu bewegen.

**Claims**

**1.** Method (100, 200) for inspection of a substrate (2), the method (100, 200) comprising the following steps:

- creating, based on at least two light beams (4, 5) originating from one and the same light source (20), a measurement volume at the intersection between said at least two light beams (4, 5), the measurement volume containing interference fringes and being positioned so as to extend over or into the substrate (2), said substrate (2) being in movement with respect to said measurement volume in a direction parallel to a main surface (S) of said substrate (2);
- acquiring (102, 202) a measurement signal representative of the light scattered by the substrate (2), as a function of the location of the measurement volume on said substrate (2);
- calculating (108, 208) at least one expected parameter, including at least one expected modulation frequency being an expected Doppler frequency, of an expected signal representative of the passage of a defect (3) of said substrate (2) through the measurement volume;
- determining (114, 214) characteristic values representative of a frequency content of the measurement signal in a neighbourhood around the expected modulation frequency, so as to constitute a validated signal representative of the presence of defects (3); the step (114, 214) of determining the characteristic values comprising the following steps:

- modelling the expected signal according to a model function, in order to produce a modelled signal;
- comparing the modelled signal to the measurement signal, including calculating a distance within the meaning of a Euclidian norm between the modelled signal and the measurement signal; and

- analyzing said validated signal in order to locate and/or identify defects (3).

**2.** Method (100, 200) according to claim 1, **characterized in that** it also comprises the steps of:

- determining (116, 216) a threshold value of the characteristic values; and
- comparing (118, 218) the validated signal to said threshold value.

**3.** Method (100, 200) according to claim 2, **characterized in that** the step of determining (116, 216) a threshold value is carried out based on a validated signal obtained with a test substrate (2) having known characteristics.

**4.** Method (100, 200) according to one of claims 1 to 3, **characterized in that** the step (114, 214) of determining characteristic values comprises pass-band filtering of the measurement signal using a pass-band suitable for transmitting only the frequency content of the measurement signal in a neighbourhood around the expected modulation frequency.

5. Method (100, 200) according to claim 4, **characterized in that** the characteristic value takes account of:

    - the modulation amplitude of the filtered measurement signal.
    - the ratio between the modulation amplitude of the filtered measurement signal and a continuous value of the measurement signal.

6. Method (100, 200) according to one of claims 1 to 3, **characterized in that** the step (114, 214) of determining characteristic values comprises the following steps:

    - calculating a local Fourier transform of the measurement signal in order to obtain a local power spectral density.
    - determining a characteristic value based on the power spectral density at, or within a neighbourhood comprising, the expected modulation frequency.

7. Method (100, 200) according to any one of the preceding claims, **characterized in that** it also comprises a step (120, 220) of constructing an image of the substrate (2) by using the validated signal.

8. Method (100, 200) according to claim 7, **characterized in that** the image construction step (120) comprises a step of assigning intensity values to characteristic values corresponding to positions on or in the substrate (2), said intensity values corresponding to pixels of the image

9. Method (100, 200) according to any one of the preceding claims, **characterized in that** it comprises a step (220a) of determining a representative parameter deduced from the measurement signal and/or the validated signal.

10. Method (100, 200) according to claim 9, **characterized in that** it comprises an image construction step (220b) comprising assigning intensity values to representative parameters corresponding to positions on or in the substrate (2), said intensity values corresponding to pixels of the image.

11. Method (100, 200) according to one of claims 8 to 10, **characterized in that** it also comprises a step (122, 222) of classifying the pixels of the image as binary objects in order to reconstruct the validated defects.

12. Method (100, 200) according to any one of the preceding claims, **characterized in that** it is implemented for the inspection of a transparent or opaque wafer (2) for electronics, optics or optoelectronics.

13. System (1) for inspecting a substrate (2), the system (1) comprising:

    - an interferometric device (30) coupled to a light source (20) in order to create, based on at least two light beams (4, 5) originating from the light source (20), a measurement volume at the intersection between said at least two light beams (4, 5), the measurement volume containing interference fringes and being positioned so as to extend over or into the substrate (2);
    - a device for moving said substrate (2) relative to said measurement volume in a direction parallel to a main surface (S) of said substrate;
    - an optoelectronic device (50) for acquiring a measurement signal representative of the light scattered by the substrate (2), as a function of the location of the measurement volume on said substrate;

    the system also comprising a processing module (60) arranged for:

    - carrying out a calculation (108, 208) of at least one expected parameter, including at least one expected modulation frequency, of an expected signal representative of the passage of a defect (3) of said substrate (2) through the measurement volume;
    - carrying out a determination (114, 214) of characteristic values representative of a frequency content of the measurement signal in a neighbourhood around the expected modulation frequency, so as to constitute a validated signal representative of the presence of defects (3), wherein the processing module (60) is arranged for:

        - carrying out a modelling of the expected signal according to a model function, in order to produce a modelled signal;
        - carrying out a comparison of the modelled signal to the measurement signal, including calculating a distance within the meaning of a Euclidian norm between the modelled signal and the measurement signal; and

    - carrying out an analysis of said validated signal in order to locate and/or identify defects (3).

14. System (1) according to the preceding claim, **characterized in that** it comprises a device for rotating the substrate (2) about an axis of rotation (X) perpendicular to a main surface (S) of said substrate, and a device for moving the interferometric device (30) in translation, arranged in order to move the measurement volume in a radial direction relative to the axis of rotation (X).

<u>100</u>

151

| Détermination de la position relative du volume de mesure par rapport au substrat | 106 |

104

| Acquisition d'un signal de mesure correspondant à la lumière diffusée par le substrat dans un volume de mesure | 102 |

| Calcul d'une fréquence de modulation correspondante à la position relative | 108 |

150

| Détermination de valeurs caractéristiques représentatives de sorte à constituer un signal validé | 114 |

| Détermination d'une valeur de seuil | 116 |

| Comparaison de la valeur caractéristique à une valeur de seuil | 118 |

| Construction d'une image du substrat à partir des valeurs caractéristiques | 120 |

| Classification des pixels de l'image en objets logiques binaires | 122 |

| Analyse statistique des objets logiques binaires | 124 |

**FIG. 2**

**Fig. 1**

**Fig. 3**

# Fig. 4a

# Fig. 4c

# Fig. 4b

# Fig. 4d

# Fig. 5a

# Fig. 5c

# Fig. 5b

# Fig. 5d

**Fig. 6a**

**Fig. 6c**

**Fig. 6b**

**Fig. 6d**

(a) Substrat propre

## Fig. 7a

(b) Substrat avec des défauts

## Fig. 7b

## Fig. 8a

## Fig. 8b

<u>200</u>

151

Détermination de la position relative du volume de mesure par rapport au substrat — 206

Acquisition d'un signal de mesure correspondant à la lumière diffusée par le substrat dans un volume de mesure — 202

204

Calcul d'une fréquence de modulation correspondante à la position relative — 208

150

Détermination de valeurs caractéristiques représentatives de sorte à constituer un signal validé — 214

Détermination d'une valeur de seuil — 218

Comparaison de la valeur caractéristique à une valeur de seuil — 216

Calcul d'un paramètre représentatif pour chaque signal validé — 220 / 220a

Construction d'une image du substrat à partir des paramètres — 220b

Classification des pixels de l'image en objets logiques binaires — 222

Analyse statistique des objets logiques binaires — 224

**FIG. 9**

Franges du volume de mesure

Cas du passage d'une particule avec d<<δ

Cas du passage d'une particule avec d≈δ

d<<δ

δ

d ≈ δ

3

# Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6590645 B1
- WO 2009112704 A
- WO 2016050735 A

**Littérature non-brevet citée dans la description**

- **W. M. FARMER**. Measurement of Particle Size, Number Density, and Velocity using a Laser Inter- ferometer. *Appl. Opt.*, 1972, vol. 11, 2603-2612